(19)

Europäisches Patentamt

European Patent Office

Office européen des brevets

(11) **EP 4 269 946 A1**

(12) **EUROPEAN PATENT APPLICATION**
published in accordance with Art. 153(4) EPC

(43) Date of publication:
**01.11.2023   Bulletin 2023/44**

(21) Application number: **21910371.0**

(22) Date of filing: **10.12.2021**

(51) International Patent Classification (IPC):
***G01C 21/28*** *(2006.01)*

(52) Cooperative Patent Classification (CPC):
**G01C 21/28**

(86) International application number:
**PCT/JP2021/045448**

(87) International publication number:
**WO 2022/138222 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **24.12.2020   JP 2020215116**

(71) Applicant: **Sony Group Corporation**
**Tokyo 108-0075 (JP)**

(72) Inventors:
• **KITA Masato**
  **Tokyo 108-0075 (JP)**

• **IWAMI Taishu**
  **Tokyo 108-0075 (JP)**
• **SCHNEIDER Daniel Marcel**
  **Tokyo 108-0075 (JP)**
• **NAKATSURU Tsutomu**
  **Tokyo 108-0075 (JP)**
• **ISHIKO Masatsugu**
  **Tokyo 108-0075 (JP)**
• **KAMATA Yutaro**
  **Tokyo 108-0075 (JP)**

(74) Representative: **D Young & Co LLP**
**120 Holborn**
**London EC1N 2DY (GB)**

(54) **INFORMATION PROCESSING DEVICE, INFORMATION PROCESSING METHOD, AND PROGRAM**

(57)    The present technology relates to an information processing device, an information processing method, and a program capable of efficiently and highly accurately creating distribution data on geomagnetic fields and the like (electric fields, magnetic fields).

A strength or an azimuth of a magnetic field or an electric field is measured, a predetermined target region is displayed, a position of the information processing device in the target region displayed on the display unit is specified, a position of the information processing device in the target region is detected based on an estimated position of the information processing device and the position of the information processing device specified by the input unit, and distribution data indicating strengths or azimuths of magnetic fields or electric fields at positions in the target region is created based on the strength or the azimuth of the magnetic field or the electric field measured by the sensor at each position of the information processing device detected by the detection unit.

EP 4 269 946 A1

Fig. 1

**Description**

[Technical Field]

The present technology relates to an information processing device, an information processing method, and a program, and more particularly, to an information processing device, an information processing method, and a program capable of efficiently and highly accurately creating distribution data on geomagnetic fields and the like (electric fields, magnetic fields).

[Background Art]

PTL 1 discloses that geomagnetic fields at specific positions are measured in advance to perform geomagnetic field-based positioning in a region where Global Positioning System (GPS) radio waves do not reach.

[Citation List]

[Patent Literature]

[PTL 1]
JP 2017-58321A

[Summary]

[Technical Problem]

When positioning is performed using geomagnetic fields (magnetic fields) and electric fields that change according to positions in a region such as a building where GPS does not work, the strengths and azimuths of the magnetic and electric fields (magnetic field strengths, electric field strengths) at specific positions in such a region are required to be measured to create distribution data on the electric fields and magnetic fields in the region in advance. It takes a lot of time and effort to measure the magnetic field strengths and azimuths and the electric field strengths and azimuths at many positions in the region. Therefore, there is a need for efficient and highly accurate measurement.
The present technology has been made in view of such a situation and makes it possible to efficiently and highly accurately create distribution data on geomagnetic fields and the like (electric fields, magnetic fields).

[Solution to Problem]

An information processing device or a program according to the present technology is an information processing device or a program causing a computer to function as the information processing device, the information processing device including: a sensor that measures a strength or an azimuth of a magnetic field or an electric field; a display unit that displays a predetermined target region; an input unit that specifies a position of the information processing device in the target region displayed on the display unit; a detection unit that detects a position of the information processing device in the target region based on an estimated position of the information processing device and the position of the information processing device specified by the input unit; and a creation unit that creates distribution data indicating strengths or azimuths of magnetic fields or electric fields at positions in the target region based on the strength or the azimuth of the magnetic field or the electric field measured by the sensor at each position of the information processing device detected by the detection unit.
An information processing method according to the present technology is an information processing method performed by an information processing device including a sensor, a display unit, an input unit, a detection unit, and a creation unit, the information processing method including: measuring, by the sensor, a strength and an azimuth of a magnetic field or an electric field; displaying, by the display unit, a predetermined target region; specifying, by the input unit, a position of the information processing device in the target region displayed on the display unit; detecting, by the detection unit, a position of the information processing device in the target region based on an estimated position of the information processing device and the position of the information processing device specified by the input unit; and creating, by the creation unit, distribution data indicating strengths and azimuths of magnetic fields or electric fields at positions in the target region based on the strength and the azimuth of the magnetic field or the electric field measured by the sensor at each position of the information processing device detected by the detection unit.
In the information processing device, the information processing method, and the program according to the present technology, a strength or an azimuth of a magnetic field or an electric field is measured, a predetermined target region is displayed, a position of the information processing device in the target region displayed on the display unit is specified, a position of the information processing device in the target region is detected based on an estimated position of the information processing device and the position of the information processing device specified by the input unit, and distribution data indicating strengths or azimuths of magnetic fields or electric fields at positions in the target region is created based on the strength or the azimuth of the magnetic field or the electric field measured by the sensor at each position of the information processing device detected by the detection unit.

[Brief Description of Drawings]

[Fig. 1]

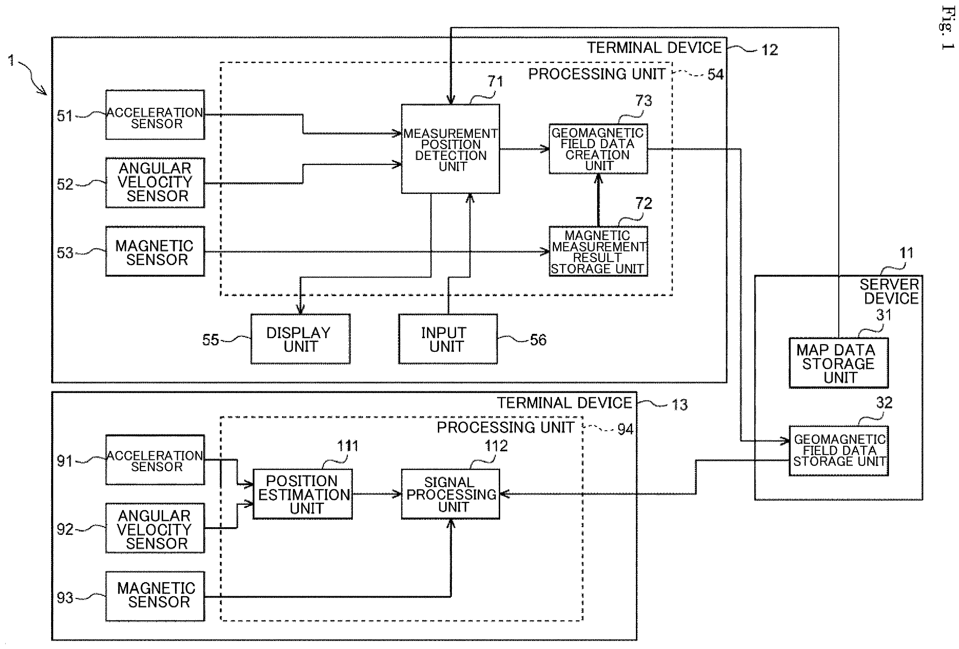

Fig. 1 is a block diagram illustrating a configuration example of an embodiment of an information processing system to which the present technology is applied.
[Fig. 2]

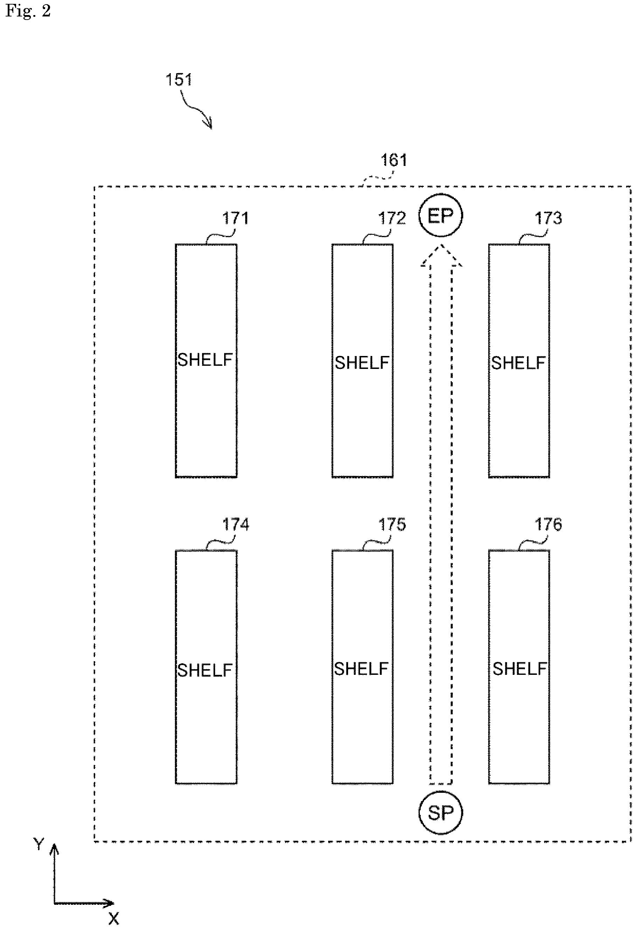

Fig. 2 is a diagram illustrating a general technique for geomagnetic field measurement in a target region for which geomagnetic field data is to be created.
[Fig. 3]

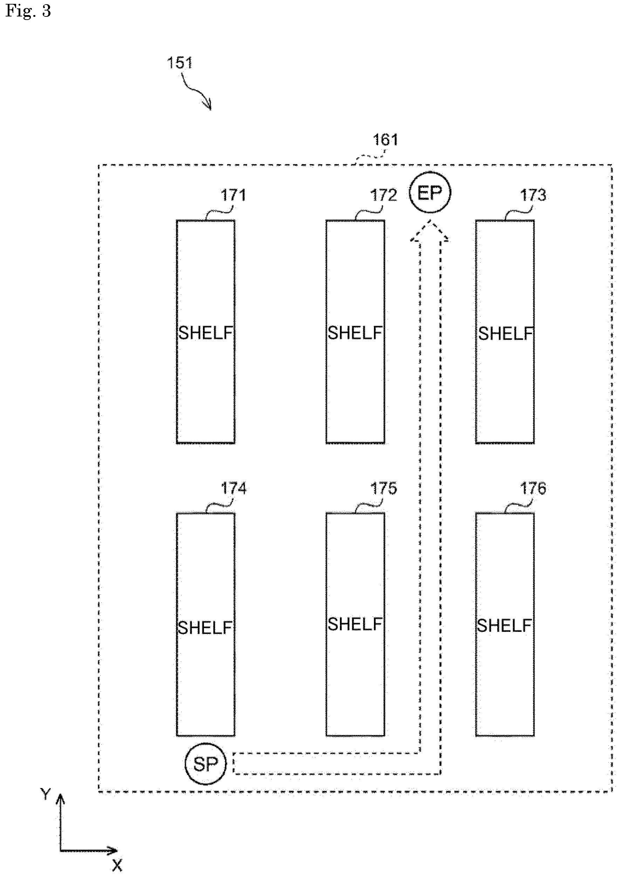

Fig. 3 is a diagram illustrating a technique for geomagnetic field measurement in a target region for which geomagnetic field data is to be created, according to PTL 1.
[Fig. 4]

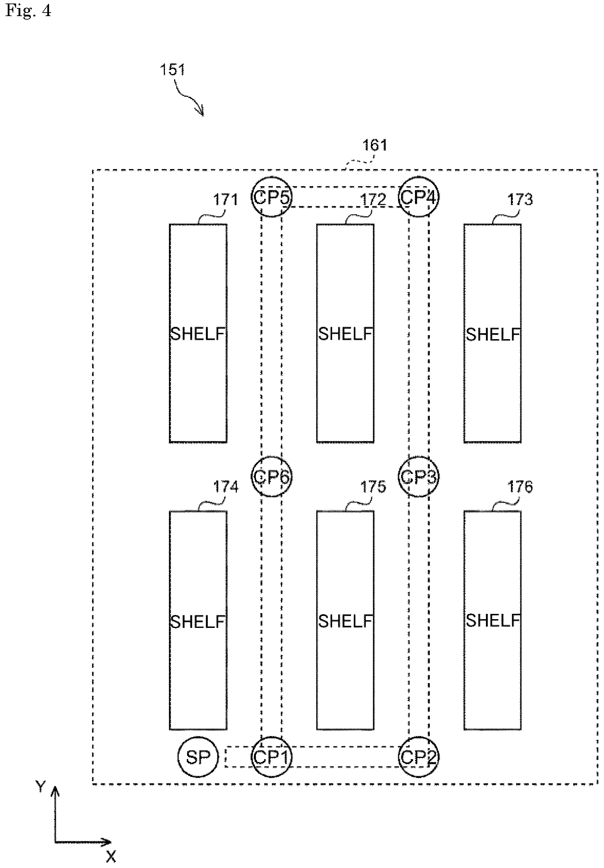

Fig. 4 is a diagram illustrating a technique using the present technology for geomagnetic field measurement in a target region for which geomagnetic field data is to be created.
[Fig. 5]

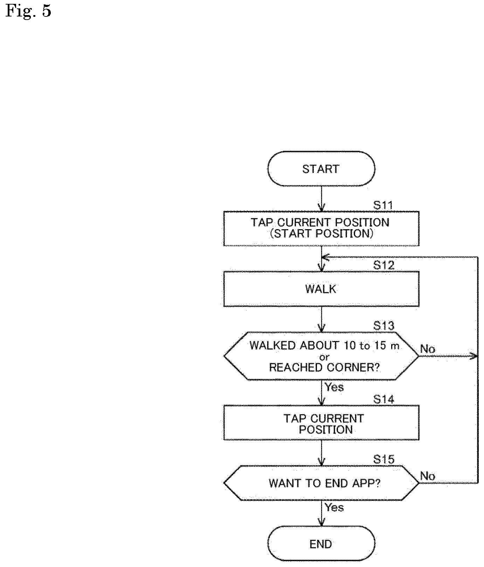

Fig. 5 is a flowchart exemplifying a procedure of operations (steps) performed by a measurer using a terminal device to measure geomagnetic fields.
[Fig. 6]

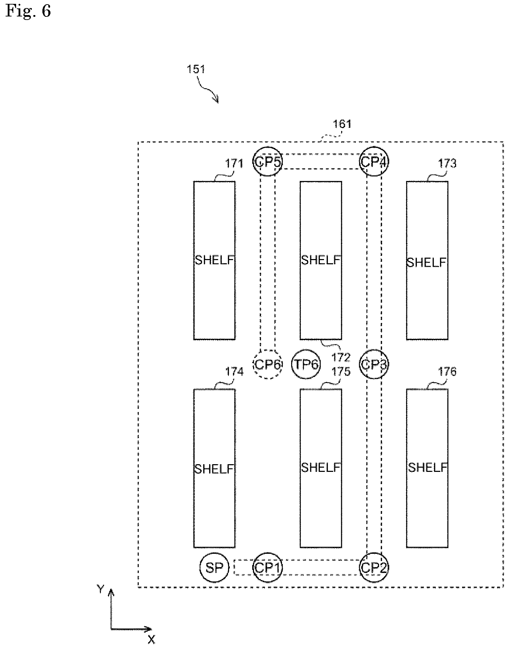

Fig. 6 is a diagram illustrating Extended mode 1 regarding processing to be performed when a way position specified by the measurer is different from the actual position.
[Fig. 7]

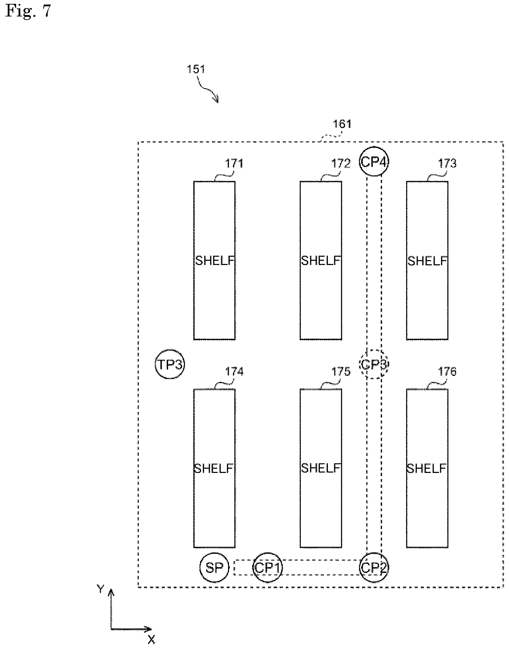

Fig. 7 is a diagram illustrating Extended mode 2 regarding processing to be performed when a difference between a way position specified by the measurer and the actual position is larger than an expected error.
[Fig. 8]

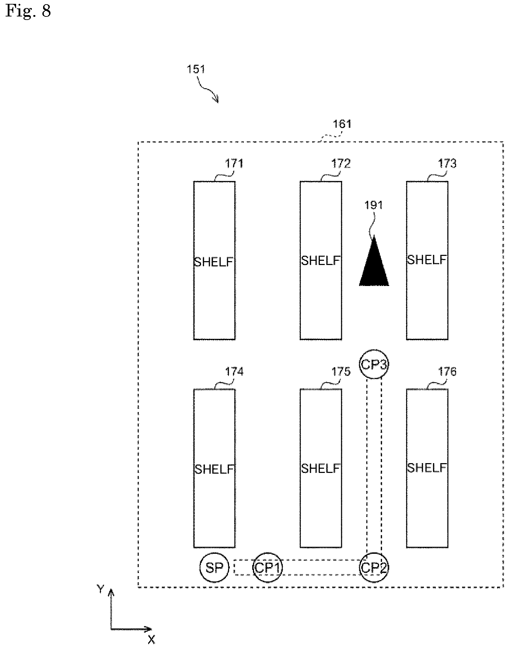

Fig. 8 is a diagram illustrating Extended mode 3 to improve the efficiency of geomagnetic field measurement.
[Fig. 9]

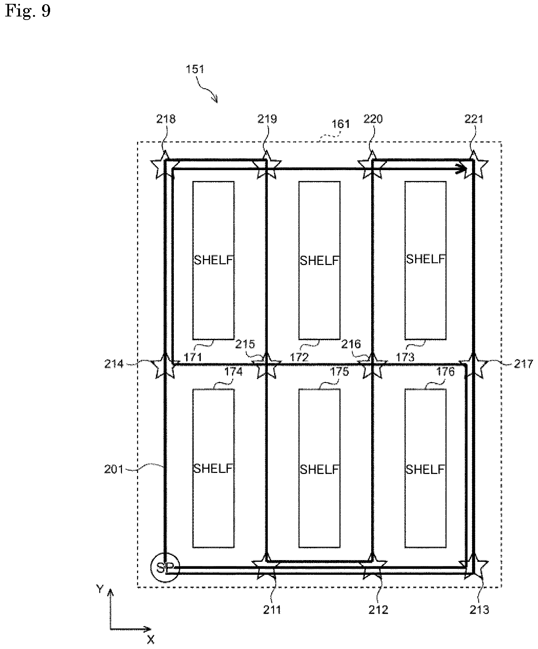

Fig. 9 is a diagram illustrating Extended mode 4 to assist a measurer in setting a measurement path and specifying a way position during geomagnetic field measurement.
[Fig. 10]

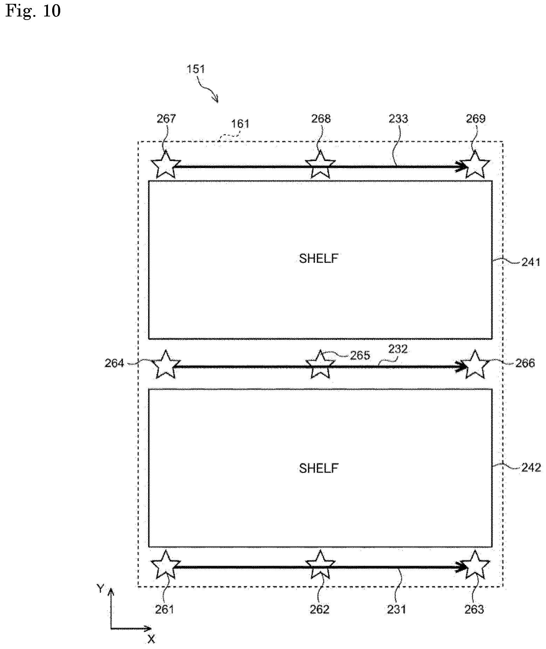

Fig. 10 is a diagram illustrating Extended mode 4 in a case where the spatial arrangement in the target region for which geomagnetic field data is to be created is different from that in Fig. 9.
[Fig. 11]

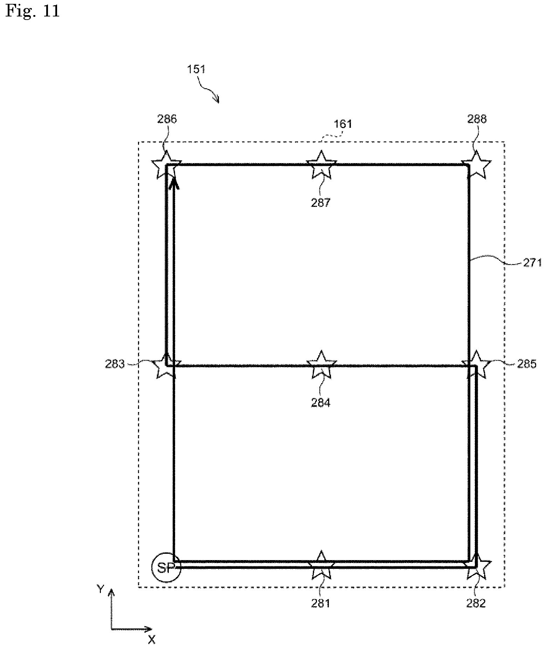

Fig. 11 is a diagram illustrating Extended mode 4 in a case where the spatial arrangement in the target region for which geomagnetic field data is to be created is different from those in Figs. 9 and 10.
[Fig. 12]

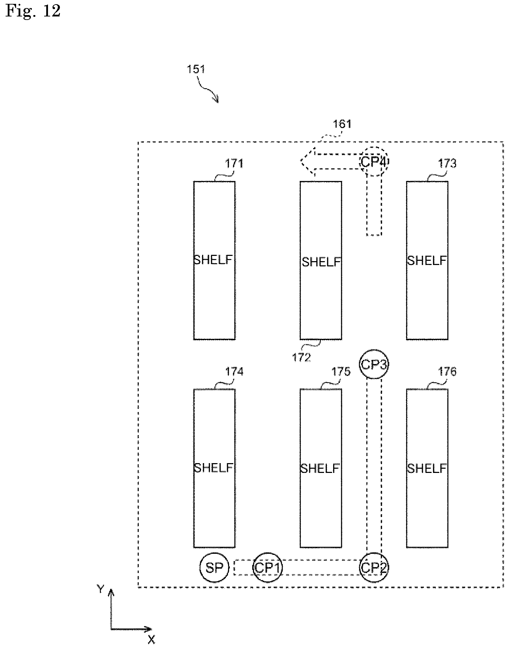

Fig. 12 is a diagram illustrating Extended mode 5 to prompt the specification of a way position.
[Fig. 13]

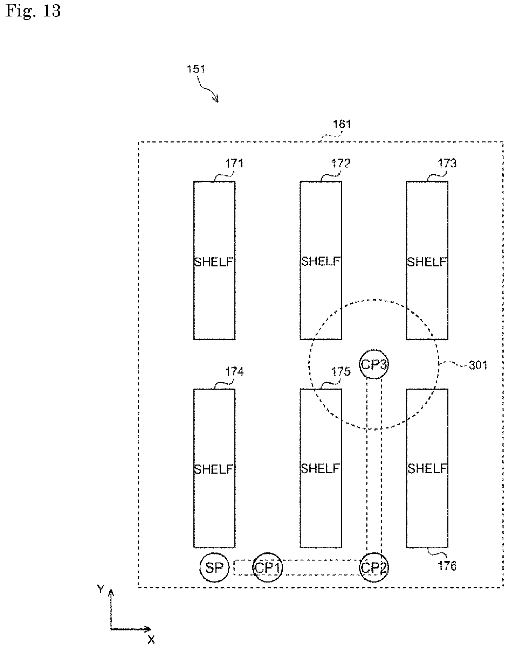

Fig. 13 is a diagram illustrating Extended mode 6 to prompt re-specification when the measurer specifies an incorrect position as a way position.
[Fig. 14]

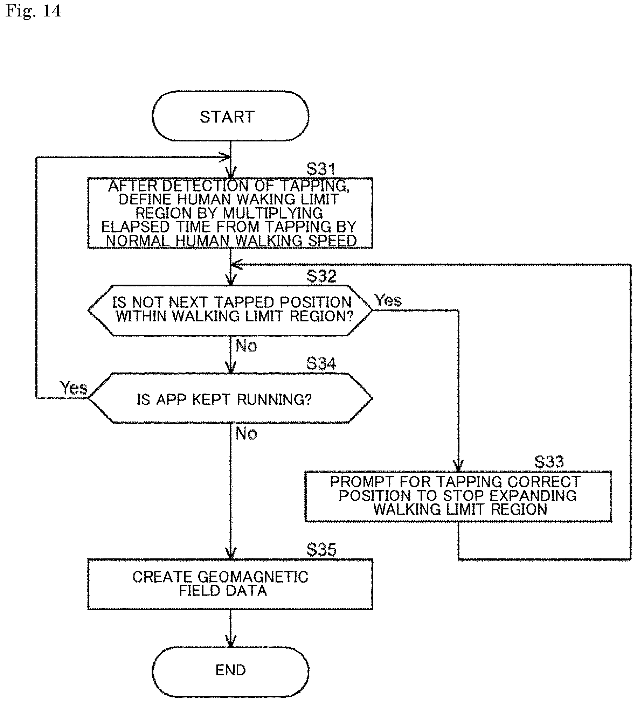

Fig. 14 is a flowchart illustrating a procedure of processing of Extended mode 6 performed by the terminal device.
[Fig. 151

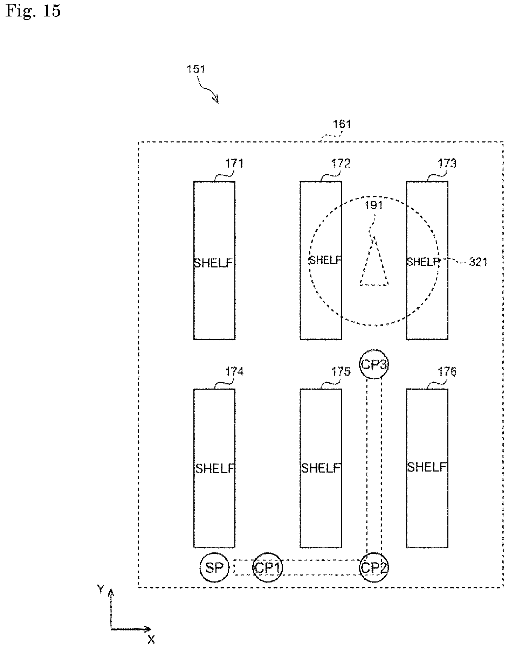

Fig. 15 is a diagram illustrating Extended mode 7 to prompt re-specification when the measurer specifies an incorrect position as a way position.
[Fig. 16]

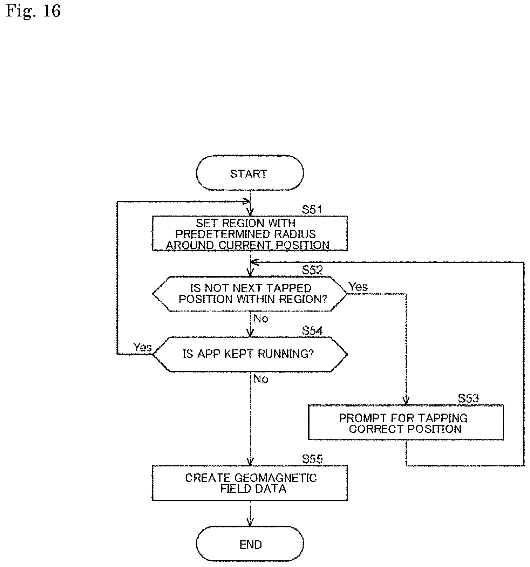

Fig. 16 is a flowchart illustrating a procedure of processing of Extended mode 7 performed by the terminal device 12.
[Fig. 17]

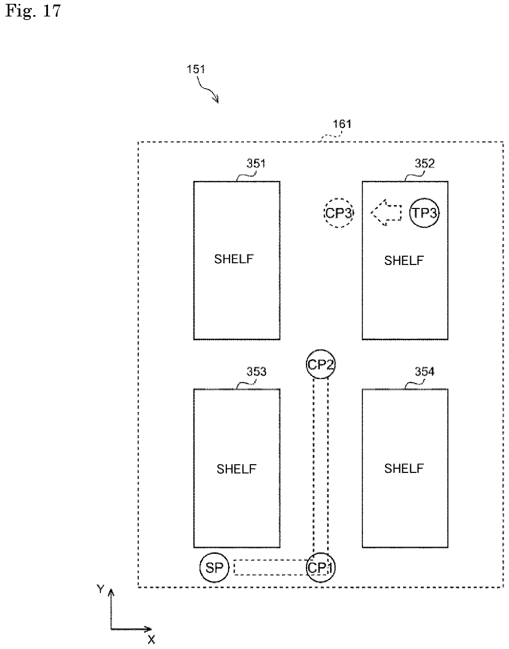

Fig. 17 is a diagram illustrating Extended mode 8 to automatically correct a way position when the measurer specifies an incorrect position as the way position.

[Fig. 18]

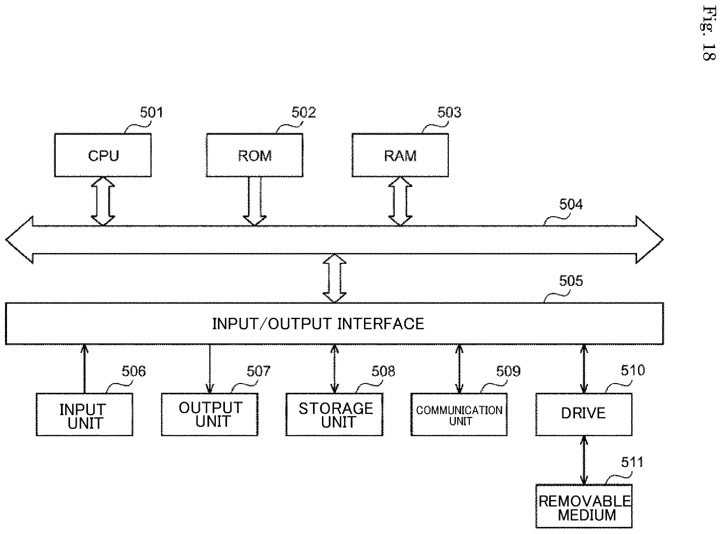

Fig. 18 is a block diagram illustrating a configuration example of hardware of a computer that executes a series of processing according to a program.

[Description of Embodiments]

Hereinafter, embodiments of the present technology will be described with reference to the drawings.

<Embodiment of Information Processing System>

Fig. 1 is a block diagram illustrating a configuration example of an embodiment of an information processing system to which the present technology is applied.

In Fig. 1, an information processing system 1, which is an embodiment of an information processing system to which the present technology is applied, creates and stores geomagnetic field data (magnetic field distribution data) for a limited region such as a building. The information processing system 1 uses the geomagnetic field data to measure the position of a terminal device such as a smart phone carried by a user moving within the region for which the geomagnetic field data is created. The geomagnetic field data (magnetic field distribution data) as used herein is data indicating magnetic field strengths and azimuths at specific positions (respective positions) in a predetermined target region, and refers to data indicating a distribution of magnetic fields (magnetic field strengths and azimuths) in the target region. The geomagnetic field data created or used by the information processing system 1 may be geomagnetic field data indicating at least one of the strengths of magnetic fields and the azimuths of magnetic fields. Hereinafter, a region for which geomagnetic field data is to be created is referred to as the target region for which geomagnetic field data is to be created, or simply the target region.

(Information Processing System 1)

The information processing system 1 includes a server device 11, a terminal device 12, and a terminal device 13.

(Server Device 11)

The server device 11 is communicably connected to (connected to communicate with) the terminal device 12 and the terminal device 13 by a communication unit (not illustrated) via a communication network or communication path, which is defined by any communication standard. Examples of communication networks and communication paths for communication connection between the server device 11 and the terminal device 12 and between the server device 11 and the terminal device 13 include the Internet, a public telephone network, a wide area communication network for mobile communication such as a so-called 4G line or 5G line, a wide area network (WAN), a local area network (LAN), and a wireless communication network for communication conforming to the Bluetooth (registered trademark) standard. The server device 11 stores map data of the target region for which geomagnetic field data is to be created and the created geomagnetic field data.
The server device 11 includes a map data storage unit 31 and a geomagnetic field data storage unit 32. The map data storage unit 31 stores map data of the target region for which geomagnetic field data is to be created, which has been created in advance. The map data of the target region for geomagnetic field data is to be created is data for drawing a map representing the shape of the target region for geomagnetic field data is to be created and the positions and shapes of objects such as shelves arranged in the target region, and includes data in which specific positions (coordinate values) in the target region in the real space are associated with the corresponding positions (coordinate values) on the map. The map data stored in the map data storage unit 31 is supplied to the terminal device 12 and used to create geomagnetic field data in the terminal device 12.
The geomagnetic field data storage unit 32 stores the geomagnetic field data created by the terminal device 12. The geomagnetic field data stored in the geomagnetic field data storage unit 32 is supplied to the terminal device 13 and used in the terminal device 13 for self-position measurement and the like.

(Terminal Device 12)

The terminal device 12 is, for example, a device that can be carried by a user (measurer) such as a smart phone or a tablet terminal. The terminal device 12 is connected to communicate with the server device 11 by a communication unit (not illustrated). The terminal device 12 operates as a device that creates geomagnetic field data by executing an application program for creating geomagnetic field data (geomagnetic field measurement). The terminal device 12 is carried by the measurer to create geomagnetic field data, and is moved within the target region for which geomagnetic field data is to be created.

The terminal device 12 includes an acceleration sensor 51, an angular velocity sensor 52, a magnetic sensor 53, a processing unit 54, a display unit 55, and an input unit 56.

The acceleration sensor 51 detects accelerations in the directions of three orthogonal axes fixed to the terminal device 12 and supplies the accelerations to the processing unit 54.

The angular velocity sensor 52 detects angular velocities around the three orthogonal axes fixed to the terminal device 12 and supplies the angular velocities to the processing unit 54.

The magnetic sensor 53 detects magnetic field strengths and azimuths in the directions of the three orthogonal axes fixed to the terminal device 12 and supplies the magnetic field strengths and azimuths to the processing unit 54.

The processing unit 54 executes an application program for creating geomagnetic field data to execute processing related to creation of geomagnetic field data. The processing unit 54 creates geomagnetic field data indicating the strengths and azimuths of the geomagnetic fields (magnetic field strengths and azimuths) at specific positions in the target region for which geomagnetic field data is to be created. The geomagnetic field data is magnetic field distribution data indicating a distribution of magnetic fields (magnetic strengths and azimuths) in the target region. The processing unit 54 supplies the created geomagnetic field data to the server device 11 and stores the geomagnetic field data in the geomagnetic field data storage unit 32.

The display unit 55 includes a display that displays various types of information to the user using the terminal device 12. The display unit 55 displays a map and the like, supplied from the processing unit 54, of the target region for which the geomagnetic field data is to be created.

The input unit 56 includes switches operated by the user using the terminal device 12, a touch panel arranged on the screen of the display unit 55, and the like. The input unit 56 receives input of the current position (measurement position) of the terminal device 12 specified by the user with respect to the map displayed on the display unit 55, and the like, supplies the current position and the like to the processing unit 54.

The processing unit 54 includes a measurement position detection unit 71, a magnetic measurement result storage unit 72, and a geomagnetic field data creation unit 73.

The measurement position detection unit 71 estimates, based on the accelerations from the acceleration sensor 51 and the angular velocities from the angular velocity sensor 52, the direction of movement and amount of movement of the terminal device 12 from a reference position to the current position by well-known pedestrian dead reckoning (PDR) technology. In other words, the measurement position detection unit 71 estimates the relative position (change in position) with respect to the reference position as the position of the terminal device 12 (the position of the magnetic sensor 53) in the target region for which geomagnetic field data is to be created. The position of the terminal device 12 estimated (measured) by the measurement position detection unit 71 is the measurement position where the geomagnetic field is being measured. Here, the estimation (measurement) of the measurement position (the position of the terminal device 12) in the measurement position detection unit 71 is not limited to the PDR technology, and for example, may be a positioning technology using image processing of an image captured by an image sensor, that is, is not limited to a specific technology or method. The measurement position detection unit 71 may acquire the estimated measurement position from a device other than the terminal device 12. As used herein, the position (measurement position) of the terminal device 12 obtained by any positioning technology before being corrected by the position (measurement position) of the terminal device 12 specified by the user through the input unit 56 is the estimated position.

For example, the measurement position detection unit 71 uses the position of the terminal device 12 at the time when the geomagnetic field measurement is started (measurement start time ts) as the reference position. The measurement position detection unit 71 estimates the position (relative position with respect to the reference position) of the terminal device 12 at elapsed time tn when a multiple of a predetermined time interval Δt elapsed from the measurement start time ts. The elapsed time tn is ts + n·Δt (n is an integer). Elapsed time t0 represents the measurement start time ts. The time when the measurement is finished (the time when the last measurement is performed) is elapsed time tN (n = N). Note that the elapsed time tn may not be the time defined by regular time intervals.

The measurement position detection unit 71 acquires from the server device 11 the map data of the target region for which geomagnetic field data is to be created, stored in the map data storage unit 31. The measurement position detection unit 71 creates a map of the target region based on the acquired map data, and obtains the position of the terminal device 12, which is the measurement position of the geomagnetic field at the elapsed time tn, as a position on the map. The position on the map is represented, for example, by an xy coordinate system with a horizontal x-axis and a vertical y-axis which are orthogonal to each other.

The measurement position detection unit 71 corrects the position of the terminal device 12 based on the current position of the terminal device 12 estimated by the PDR and the current position of the terminal device 12 input through the input unit 56. Thus, the measurement position detection unit 71 supplies the map of the geomagnetic field data target region to the display unit 55 and causes the display unit 55 to display the map. A measurer who measures geomagnetic fields in the target region carries the terminal device 12 and measures the strengths and azimuths of the geomagnetic fields (magnetic field strengths and azimuths) by using the magnetic sensor 53 while moving within the target region.

Meanwhile, the measurer appropriately specifies the current position of the terminal device 12 (the position of the measurer) on the map of the target region displayed on the display unit 55. The input unit 56 is, for example, a touch panel installed on the screen of the display unit 55. When the measurer touches the current position on the screen of the display unit 55 on which the map is displayed, the touched position is supplied to the measurement position detection unit 71. As described herein, the strength(s) and azimuth(s) of geomagnetic field(s) or the strength(s) and azimuth(s) of magnetic field(s) includes referring to only the strength(s) of geomagnetic field(s) (magnetic field strength(s)), only the azimuth(s) of magnetic field(s) (magnetic field strength(s)), or both the strength(s) of geomagnetic field(s) (magnetic field strength(s)) and the azimuth(s) of magnetic field(s) (magnetic field strength(s)). For example, when the information processing system 1 creates, as geomagnetic field data (distribution data of magnetic fields), distribution data indicating only the distribution of magnetic field strengths, the measurements obtained by the magnetic sensor 53 may be interpreted as only the magnetic field strengths even when the measurements are represented as magnetic field strengths and azimuths.

When the measurer specifies the current position of the terminal device 12 through the input unit 56, the measurement position detection unit 71 corrects the position of the terminal device 12 estimated by the PDR so as to be the position specified by the measurer. This reduces errors in the measurement positions of geomagnetic fields caused by the PDR. Specifically, in the case where the position of the terminal device 12 is estimated by the PDR based on the sensor outputs of the acceleration sensor 51 and the angular velocity sensor 52, errors accumulate over time due to drift and the like. Since the errors are corrected by the measurer appropriately specifying the current position of the terminal device 12, errors in the measurement positions of geomagnetic fields are reduced.

Based on the position of the terminal device 12 estimated by the PDR and the current position of the terminal device 12 input through the input unit 56, the measurement position detection unit 71 detects the position of the terminal device 12 at the elapsed time tn between the measurement start time t0 and the measurement end time tN as a measurement position pn of a geomagnetic field, and supplies the measurement position pn to the geomagnetic field data creation unit 73. Note that the measurement position pn represents the position of the terminal device 12 at the elapsed time tn.

The magnetic measurement result storage unit 72 acquires and stores the magnetic field strength and azimuth measured by the magnetic sensor 53 at the elapsed time tn between the measurement start time ts and the measurement end time tN. The magnetic sensor 53 measures a magnetic field vector whose components are magnetic field strengths and azimuths in the three axial directions of xyz. The magnetic measurement result storage unit 72 acquires and stores the magnitude and azimuth of the magnetic field vector measured by the magnetic sensor 53.

The geomagnetic field data creation unit 73 associates the measurement position pn at each elapsed time tn from the measurement position detection unit 71 with the magnetic field strength and azimuth measured at the same elapsed time tn stored in the magnetic measurement result storage unit 72. As a result, the magnetic field strengths and azimuths are associated with the respective measurement positions pn in the geomagnetic field data target region. The geomagnetic field data creation unit 73 interpolates magnetic field strengths and azimuths at positions other than the measurement positions pn based on the magnetic field strengths and azimuths at the measurement positions pn. For example, the geomagnetic field data creation unit 73 obtains magnetic field strengths and azimuths in a region between two adjacent measurement positions pn by linear interpolation or the like. As a result, geomagnetic field data (magnetic field distribution data) is created. The geomagnetic field data creation unit 73 supplies the created geomagnetic field data to the server device 11 to store the geomagnetic field data in the geomagnetic field data storage unit 32. Note that the geomagnetic field data creation unit 73 may divide the target region into a plurality of regions, create geomagnetic field data for each of the division regions, and then synthesize the pieces of geomagnetic field data for the division regions to create geomagnetic field data for the entire target region.

(Terminal Device 13)

The terminal device 13 is, for example, a device that can be carried by the user, such as a smart phone or a tablet terminal. The terminal device 13 is connected to communicate with the server device 11 through a communication unit (not illustrated). The terminal device 13 operates as a device that measures its own position using geomagnetic field data by executing a predetermined application program.

The terminal device 13 includes an acceleration sensor 91, an angular velocity sensor 92, a magnetic sensor 93, and a processing unit 94.

The acceleration sensor 91 detects accelerations in the directions of three orthogonal axes fixed to the terminal device 13 and supplies the accelerations to the processing unit 94.

The angular velocity sensor 92 detects angular velocities around the three orthogonal axes fixed to the terminal device 13 and supplies the angular velocities to the processing unit 94.

The magnetic sensor 93 detects magnetic field strengths and azimuths in the directions of the three orthogonal axes fixed to the terminal device 13 and supplies the magnetic field strengths and azimuths to the processing unit 94.

The processing unit 94 executes an application program for estimating the self-position to execute processing related to self-position estimation.

The processing unit 94 includes a position estimation unit 111 and a signal processing unit 112.

The position estimation unit 111 estimates the position of the terminal device 13 by a well-known PDR technology based on the accelerations from the acceleration sensor 91 and the angular velocities from the angular velocity sensor 92, and supplies the position to the signal processing unit 112. However, the estimation of the position of the terminal device 13 in the position estimation unit 111 is not limited to the PDR technology, and for example, may be a positioning technology using image processing of an image captured by an image sensor, that is, is not limited to a specific technology or method.

The signal processing unit 112 acquires the geomagnetic field data of the target region from the geomagnetic field data storage unit 32 of the server device 11. The signal processing unit 112 calculates the position and orientation of the terminal device 13 based on the position of the terminal device 13 from the position estimation unit 111, the magnetic field strengths and azimuths from the magnetic sensor 93, and the geomagnetic field data. In other words, the signal processing unit 112 performs highly accurate position measurement based on not only the position of the terminal device 13 from the position estimation unit 111 but also the magnetic strengths and azimuths from the magnetic sensor 93 and the geomagnetic field data. Note that the position and orientation of the terminal device 13 calculated by the signal processing unit 112 can be used for any processing in the terminal device 13 and the server device 11 without being limited to specific processing.

The information processing system 1 as described above can be used for customer behavior analysis, real-time advertising, product information push in stores, in-store navigation, visualization of employee behavior (improvement of operations), and the like. Since the present technology mainly relates to measurement of geomagnetic field in a target region for which geomagnetic field data is to be created, the terminal device 12 that measures geomagnetic field will be described below. Note that the present technology can be applied to measurements of radio waves (electric field strengths) in a predetermined target region instead of measurements of geomagnetic fields (magnetic field strength/azimuth) in a predetermined target region, and may create electric field distribution data indicating a distribution of electric field strengths instead of creating geomagnetic field data. The electric field distribution data thus created can be used for self-position measurement and the like using radio waves such as beacons.

<Creation of Geomagnetic Field Data>

Creation of geomagnetic field data using the terminal device 12 will be described.

<General Technique for Geomagnetic Field Measurement>

Fig. 2 is a diagram illustrating a general technique for geomagnetic field measurement in a target region for which geomagnetic field data is to be created.

In Fig. 2, a map 151 is a plan view of a target region 161 where geomagnetic field data is to be created projected in the vertical direction (height direction). In the example of the map 151 in Fig. 2, an xy coordinate system is set in the target region 161, with the horizontal direction on the drawing sheet as the x-axis and the vertical direction of the drawing sheet as the y-axis. Six rectangular shelves 171 to 176 whose longitudinal direction is the y-axis direction are arranged in the target region 161. The shelves 171 to 173 are arranged in parallel in the upper half area on the drawing sheet, and the shelves 174 to 176 are arranged in parallel in the lower half area on the drawing sheet. These shelves 171 to 176 make five passages each extending in the y-axis direction and three passages each extending in the x-axis direction are arranged to cross each other in the target region 161.

In a general technique for geomagnetic field measurement, a measurement start position SP and a measurement end position EP of a linear measurement path for geomagnetic field measurement are set on the map 151 of the target region 161 for which geomagnetic field data is to be created, as illustrated in Fig. 2. The measurer starts the measurement (geomagnetic field measurement) of a geomagnetic field (magnetic field strength/azimuth) at the measurement start position SP, and records the measurement start time t0 at which the geomagnetic field measurement is started. When the geomagnetic field measurement is started, the measurer starts walking at a constant walking speed and goes straight toward the measurement end position EP. When reaching the measurement end position EP, the measurer ends the geomagnetic field measurement and records the measurement end time tN at which the geomagnetic field measurement is ended. As a result of such geomagnetic field measurement, under assumption that a pedestrian moves straight ahead at a constant walking speed during the geomagnetic field measurement, the position (measurement positions) of the pedestrian and the measured value (measured magnetic field strength and azimuth) at any time between the measurement start time and the measurement end time are determined. As a result, the magnetic field strength and azimuth at each measurement position on the measurement path can be obtained by associating the measurement position and the measurement value at the same elapsed time. In this manner, one or more linear measurement paths are set in the target region 161, and geomagnetic fields are measured in all the measurement target regions of the target region 161. Each measurement target region of the target region 161 represents, for example, a space such as a passage in which a person may be present.

According to the general technique for geomagnetic field measurement, the measurer is required to walk in a straight line at a constant speed, which restricts the movement of the measurer. In particular, when there is an obstacle in the passage, it prevents geomagnetic field measurement with high accuracy. Since it is necessary to divide the target region 161 into straight measurement paths as measurement target regions to measure geomagnetic fields, there is a problem that it takes a long time to measure the geomagnetic fields of all the measurement target regions.

<Technique for Geomagnetic Field Measurement According to PTL 1>

Fig. 3 is a diagram illustrating a technique for geomagnetic field measurement in a target region for which geomagnetic field data is to be created, according to PTL 1. In the drawing, the same reference numerals are given to the portions corresponding to those in the map 151 of Fig. 2, and description thereof will be omitted.

In PTL 1 (Japanese Patent Application Publication No. 2017-58321), a measurement start position SP and a measurement end position EP are set in advance as in the case of Fig. 2. The measurer starts geomagnetic field measurement using a terminal device at the measurement start position SP, and starts walking toward the measurement end position EP while carrying the terminal device. The terminal device measures geomagnetic fields while measuring its own position with an acceleration sensor. When reaching the measurement end position EP, the measurer ends the geomagnetic field measurement. As a result of such geomagnetic field measurement, measurement positions on the measurement path where the measurer has walked are associated with the respective magnetic fields strength and azimuths at the measurement positions, so that the magnetic field strengths and azimuths at the measurement positions are obtained. One or more measurement paths are set in the target region 161, and geomagnetic fields are measured in all the measurement target regions of the target region 161.

The technique for geomagnetic field measurement according to PTL 1 requires to divide a measurement target region into a plurality of measurement paths to perform geomagnetic field measurement, which needs to repeatedly perform the geomagnetic field measurement for each measurement path. Therefore, there is a problem that for a large target region 161, the geomagnetic field measurement is repeated many times and it takes a long time to create geomagnetic field data. In a case where a measurement position (position of the terminal device) of a geomagnetic field is estimated using an acceleration sensor or the like, there is a problem that errors accumulate and each geomagnetic field measurement position cannot be accurately estimated.

<Technique for Geomagnetic Field Measurement According to Present Technology >

Fig. 4 is a diagram illustrating a technique using the present technology for geomagnetic field measurement in a target region for which geomagnetic field data is to be created. In the drawing, the same reference numerals are given to the portions corresponding to those in the map 151 of Fig. 2, and description thereof will be omitted.

According to the present technology, the measurer launches an application for creating geomagnetic field data (geomagnetic field measurement) on the terminal device 12 of Fig. 1. The terminal device 12 reads data on the map 151 of the target region 161 from the server device 11 and displays the map 151 of the target region 161 on the display unit 55 of the terminal device 12. Note that the display of the target region 161 on the display unit 55 is not limited to the case of displaying the map 151 as illustrated in Fig. 4. An image may be displayed such that the measurer can recognize a region (passage, etc.) where a person is allowed to be located or a characteristic position in the target region 161. For example, an image of a space within the target region 161 visually recognized by the measurer near the current position of the measurer may be stereoscopically displayed on the display unit 55. To start geomagnetic field measurement, the measurer touches the measurement start position SP at which geomagnetic field measurement is to be started on the map 151 displayed on the display unit 55, so that the measurement start position SP is specified through the input unit 56, which is a touch panel. However, the measurement start position SP may be automatically set by the processing unit 54 (measurement position detection unit 71) of the terminal device 12. In that case, the automatically set measurement start position SP is displayed on the map 151 displayed on the display unit 55. The operator moves to the measurement start position SP displayed on the map 151 and starts geomagnetic field measurement at the measurement start position SP.

Note that the operation input unit 56 includes a touch panel placed on the screen of the display unit 55. Specifying a position for the measurement position detection unit 71 by the measurer touching a position on the map 151 displayed on the display unit 55 is also simply referred to as specification of a position or the like.

When the measurer touches the measurement start position SP on the map 151 on the display unit 55, geomagnetic field measurement is started. When the geomagnetic field measurement is started, the storage of the magnetic field strength and azimuth measured by the magnetic sensor 53 in the magnetic measurement result storage unit 72 is started. At the same time, based on sensor outputs from the acceleration sensor 51 and the angular velocity sensor 52, the measurement position detection unit 71 starts estimating the position (measurement position) of the terminal device 12. When the geomagnetic field measurement is started, the measurement position detection unit 71 uses the measurement start position SP as a reference position and estimates the relative position with respect to the reference position as the measurement position. The measurement position detection unit 71 estimates the measurement position pn at the elapsed time tn defined at regular intervals from the measurement start time t0. The magnetic measurement result storage unit 72 stores the magnetic field strength and azimuth measured by the magnetic sensor 53 at each elapsed time tn after the start of geomagnetic field measurement.

The measurer starts walking while carrying the terminal device 12. The measurement path where the measurer is to walk can be freely determined by the measurer. For example, the measurer decides a measurement path so as to pass through all the measurement target regions of the target region 161 and moves in the measurement path. At this time, the measurer may decide a measurement path so as to pass through all the measurement target regions in one geomagnetic field measurement, or may decide a measurement path for each of geomagnetic field measurements to be performed a plurality of times.

After the measurer starts walking, for example, every 10 to 15 m of walking or at a characteristic position such as an area where passages intersect (corner area), the measurer taps the corresponding position on the map 151 displayed on the display unit 55 to specify the current position. The characteristic position such as a corner area where passages intersect refers to a position where the measurer can identify a position on the map 151 corresponding to a position in the real space of the target region 161. For example, instead of the corner area, a position at which a measurement path between two corners is equally bisected, such as a way position at a measurement path between two corners is bisected may be a characteristic position because the measurer can intuitively identify such a position.

In the case where the measurer specifies the current position on the map 151 every time the measurer walks a moving distance of 10 to 15 m, the error in the current position estimated by the measurement position detection unit 71 can be prevented from exceeding the allowable limit, and unnecessary increase in the time and effort for specifying the current position can be suppressed. However, the moving distance of 10 to 15 m is an example and is not limited to this. In particular, in the case where characteristic positions on the measurement path are given at intervals of a moving distance of 10 to 15 m, the operator may specify the current position only at each characteristic position. In the case where characteristic positions on the measurement path are close to each other, for example, the measurer does not need to specify the current position at all the characteristic positions on the measurement path, and may specify the current position only at one or some of the characteristic positions. Note that the measurer may specify the current position at any position other than the characteristic positions, or may specify the current position at any position after walking a distance other than 10 to 15 m. The measurer may specify the current position without fail at each corner area.

In the example of Fig. 4, the measurer starts geomagnetic field measurement at the measurement start position SP and starts walking. After passing through way positions CP1 to CP6 in order, the measurer returns to the way position CP1 and completes the geomagnetic field measurement. Note that the measurement path illustrated in Fig. 4 is an example, and the measurer can continue the geomagnetic field measurement until the measurer walks all the passages in the target region 161.

The way positions CP1 to CP6 are corner areas where passages intersect. In this case, each time the measurer reaches the way positions CP1 to CP6 in order, the measurer touches the current position on the map 151 on the display unit 55 to specify the way positions CP1 to CP6. When reaching the way position CP1 after reaching the way position CP6, the measurer touches the current position on the map 151 on the display unit 55 to specify the way position CP1 and at the same time issues an instruction to end the geomagnetic field measurement. Note that the instruction to end the geomagnetic field measurement is issued by, for example, double-tapping the end position on the map 151 on the display unit 55. However, the instruction is not limited to this way.

Each time the measurer specifies one of the way positions CP1 to CP6 on the map 151 on the display unit 55, the measurement position detection unit 71 of the terminal device 12 corrects the measurement position estimated by the PDR to the tapped way position. For correction of the measurement position, for example, the following correction method can be adopted.

For example, when the measurer taps the current position on the map 151 on the display unit 55 to specify the way position CP 1, the measurement position detection unit 71 resets the PDR-based calculation of the relative position. Specifically, when the measurement position detection unit 71 resets the PDR-based calculation of the relative position, the measurement position detection unit 71 sets the position of the terminal device 12 at that time as a reference position and calculates the relative position with respect to the reference position (direction of movement and amount of movement after the reset time). The measurement position detection unit 71 changes the reference position to the way position CP1 until the measurer specifies the next way position CP2 as the current position, and sets a position indicated by the relative position calculated by the PDR with respect to the reference position as a measurement position. When the measurer specifies the next way position CP2, the measurement position detection unit 71 resets the PDR-based calculation of the relative position and changes the reference position to the way position CP2. In this way, every time the measurer specifies a way position, the measurement position detection unit 71 resets the PDR-based calculation of the relative position, and changes the reference position to the way position specified by the measurer, so that the measurement position is corrected. Note that the method for correcting the measurement position is not limited to this.

When the measurer issues the instruction to end the geomagnetic field measurement, the geomagnetic field data creation unit 73 acquires the measurement position pn at the elapsed time tn detected by the measurement position detection unit 71 and the magnetic field strength and azimuth at the elapsed time tn stored in the magnetic measurement result storage unit 72, and associates the measurement position pn with the magnetic field strength and azimuth at the same elapsed time tn. As a result, the geomagnetic field data creation unit 73 obtains the magnetic field strength and azimuth at each measurement position pn on the measurement path where the measurer has walked. The measurer performs the geomagnetic field measurement one or more times in the target region 161 so that the magnetic field strengths and azimuths of all the measurement target regions are measured. As a result, the geomagnetic field data creation unit 73 can obtain the magnetic field strengths and azimuths of all the measurement target regions of the target region 161 and create geomagnetic field data (magnetic field distribution data) of the target region 161.

On the map displayed on the display unit 55, the measurement path where the measurer has passed may be colored according to the number of times (for example, blue for the first time, green for the second time, and red for the third time). The measurement paths where the measurer has never passed may be highlighted.

When the number of way positions specified by the measurer reaches a predetermined number of times or more, the measurer may be prompted to end the geomagnetic field measurement. This is because it takes time and effort to start over from the beginning when a mistake is made in specifying a way position.

<Procedure of Operations Performed by Measurer Using Terminal Device 12 at Time of Geomagnetic Field Measurement>

Fig. 5 is a flowchart exemplifying a procedure of operations (steps) performed by the measurer using the terminal device 12 to measure geomagnetic fields.

In step S11, the measurer taps (specifies) as the measurement start position the current position on the map 151 of the target region 161 for which geomagnetic field data is to be created displayed on the display unit 55 of the terminal device 12. In response to this, geomagnetic field measurement is started. The processing proceeds from step S11 to step S12.

In step S12, the measurer walks a geomagnetic field measurement target region (region where a person may be located) within the target region 161 while carrying the terminal device 12. The processing proceeds from step S12 to step S13.

In step S13, the measurer determines whether the measurer has walked about 10 to 15 m or has reached a corner area.

If the measurer determines in step S13 that the measurer has not walked about 10 to 15 m and has not reached any corner area, the processing returns to step S12 to repeat step S12 and subsequent steps.

If the measurer determines in step S13 that the measurer has walked about 10 to 15 m or has reached a corner area, the processing proceeds to step S14.

In step S14, the measurer taps (specifies) the current position on the map 151 on the display unit 55. The processing proceeds from step S14 to step S15.

In step S15, the measurer determines whether or not to end the application for creating geomagnetic field data. In other words, the measurer determines whether or not to end the geomagnetic field measurement.

If the measurer determines in step S15 not to end the application, the processing returns to step S12 to repeat step S12 and subsequent steps.

If the measurer determines in step S15 to end the application, the measurer performs an operation to end the application. This completes the steps of the flowchart.

As described above, according to the technique for geomagnetic field measurement using the present technology, the measurer does not need to walk in a straight line at a constant speed, and the geomagnetic field measurement can be performed with high accuracy even when there is an obstacle in the passage. Since it is not necessary to set the measurement end position of the geomagnetic field measurement in advance, the measurer can measure geomagnetic fields while moving freely within the target region 161 for which geomagnetic field data is to be created, and can freely choose the measurement path while measuring the geomagnetic fields. In addition, there is no need to divide the measurement target region in the target region 161 into a plurality of measurement paths to measure geomagnetic fields. Therefore, the geomagnetic field measurement can be performed for all the measurement target regions in a short period of time, and the efficiency can be improved. Since the measurement position of the geomagnetic field (the position of the terminal device 12) estimated by the acceleration sensor and the like is appropriately corrected by the position specified by the measurer, the measurement position of the geomagnetic field can be detected with high accuracy. As a result, highly accurate geomagnetic field data (magnetic field distribution data) can be created.

<Extended Modes>

Hereinafter, extended modes regarding processing of the terminal device 12 to which the present technology is applied will be described.

<Extended Mode 1>

Extended mode 1 relates to processing to be performed when a way position (current position) specified by the measurer on a map displayed on the display unit 55 during geomagnetic field measurement using the terminal device 12 is different from the actual position.

Fig. 6 is a diagram illustrating Extended mode 1 regarding processing to be performed when a way position specified by the measurer is different from the actual position. In the drawing, the same reference numerals are given to the portions corresponding to those in the map 151 of Fig. 4, and description thereof will be omitted.

In Fig. 6, it is assumed that the measurer has started geomagnetic field measurement at the measurement start position SP, and has walked a measurement path passing through the way positions CP1 to CP6 in order while carrying the terminal device 12. When the measurer reaches the way position CP6, there may be a case where the measurer specifies a different position TP6 than the way position CP6 that is expected to be specified on the map 151 on the display unit 55. In such a case, the accuracy of the created geomagnetic field data deteriorates. Therefore, in order to prevent the accuracy of the geomagnetic field data from deteriorating due to errors in the way positions specified by the measurer, the terminal device 12 can employ the following method.

A first method is that the measurer measures the geomagnetic field (magnetic field strength and azimuth) at the same measurement position a plurality of times, for example, by walking the same measurement path a plurality of times. In other words, the geomagnetic field measurement is performed a plurality of times for all the measurement target regions within the target region 161 for which geomagnetic field data is to be created. Thus, the geomagnetic field data creation unit 73 creates a plurality of pieces of geomagnetic field data for the target region 161 in a manner that one piece of geomagnetic field data is created for one geomagnetic field measurement for the entire measurement target region. The geomagnetic field data creation unit 73 creates final geomagnetic field data by averaging the plurality of pieces of geomagnetic field data. In other words, the geomagnetic field data creation unit 73 creates geomagnetic field data composed of average values each of which is of magnetic field strengths and azimuths at the same position, and uses the created geomagnetic field data as final geomagnetic field data.

The final geomagnetic field data may be obtained by averaging a plurality of pieces of geomagnetic field data respectively obtained by different measurers, not limited to the same measurer.

A second method is that the measurement position detection unit 71 obtains the moving speed between the way positions already passed, and estimates the next way position of the measurer based on the way positions and the moving speed. For example, in Fig. 6, it is assumed that the way positions CP1 to CP5 are specified by the measurer on the map 151 on the display unit 55 when reaching the respective way positions. Also, let $(x1, y1)$ to $(x5, y5)$ be the xy coordinate values of the way positions CP1 to CP5, respectively. Let $(x6, y6)$ be the xy coordinate values of the next way position CP6. On this assumption, the measurement position detection unit 71 estimates the xy coordinate values $(x6, y6)$ of the next way position CP6 by the following Equations (1) and (2).

$$x6 = \alpha1\ x5 + \alpha2\ x4 + \alpha3\ x3 + \alpha4\ x2 + \alpha5\ x1 \qquad (1)$$

$$y6 = \beta1\ y5 + \beta2\ y4 + \beta3\ y3 + \beta4\ y2 + \beta5\ y1 \qquad (2)$$

Here, $\alpha1$ to $\alpha5$ are values determined according to the moving speed in the x-axis direction to the way positions CP1 to CP5 from their respective previous way positions. The way position previous to the way position CP1 is the measurement start position SP. $\beta1$ to $\beta5$ are values determined according to the moving speed in the y-axis direction to the way positions CP1 to CP5 from their respective previous way positions.

The measurement position detection unit 71 may set as the way position CP6 an intermediate position between the estimated way position CP6 and the way position TP6 specified by the measurer, or may set as the way position CP6 the estimated way position CP6 if there is a large difference between the estimated way position CP6 and the way position TP6.

<Extended Mode 2>

Extended mode 2 relates to processing to be performed when a difference between a way position (current position) specified by the measurer on a map displayed on the display unit 55 during geomagnetic field measurement using the terminal device 12 and the actual position is larger than an expected error.

Fig. 7 is a diagram illustrating Extended mode 2 regarding processing to be performed when a difference between a way position specified by the measurer and the actual position is larger than an expected error. In the drawing, the same reference numerals are given to the portions corresponding to those in the map 151 of Fig. 4, and description thereof will be omitted.

In Fig. 7, it is assumed that the measurer starts geomagnetic field measurement at the measurement start position SP, and walks a measurement path passing through the way positions CP1 to CP4 in order while carrying the terminal device 12. When the measurer reaches the way position CP3, there may be a case where the measurer specifies a greatly different position TP3 than the way position CP3 that is expected to be specified on the map 151 on the display unit 55. In such a case, the created geomagnetic field data has low accuracy. Therefore, in order to prevent the accuracy of the geomagnetic field data from deteriorating when a difference between a way position specified by the measurer and the actual position is larger than an expected error, the terminal device 12 can adopt the following method.

When the measurer specifies a way position, the measurement position detection unit 71 of the terminal device 12 determines whether or not the way position is unrealistic as a position reachable from the previously specified way position with a human walking speed. For example, in the example of Fig. 7, it is determined whether or not the way position TP3 specified by the measurer is within a distance reachable from the previous way position CP2 with a human walking speed. Specifically, the measurement position detection unit 71 calculates a maximum distance reachable from the way position CP2 based on the elapsed time from the way time at which the way position CP2 was reached and based on a human walking speed (for example, an average walking speed). If the distance between the way position CP2 and the specified way position TP3 is greater than the maximum distance, the measurement position detection unit 71 determines that the specified way position TP3 is unrealistic as a position reachable with a human walking speed.

In this case, the measurement position detection unit 71 cancels the way position TP3 specified by the measurer. When the way position TP3 is canceled, the measurement position detection unit 71 does not correct the measurement position estimated by the PDR with the way position TP3. It may be notified that the specified way position TP3 is unrealistic as a position reachable with a human walking speed, so that the already specified way position can be canceled through a predetermined operation (double tap, etc.) to allow a way position to be specified again (re-specified). Alternatively, when a way position can be re-specified, the measurement position detection unit 71 may estimate the way position using Equations (1) and (2) described in the second method of Extended mode 1, and display the estimated way position on the map 151 on the display unit 55 as a candidate for the way position that is expected to be specified by the measurer.

<Extended Mode 3>

Extended mode 3 relates to processing for improving the efficiency of creating geomagnetic field data (geomagnetic field measurement).

Fig. 8 is a diagram illustrating Extended mode 3 to improve the efficiency of geomagnetic field measurement. In the drawing, the same reference numerals are given to the portions corresponding to those in the map 151 of Fig. 4, and description thereof will be omitted.

The map 151 of the target region 161 for which geomagnetic field data is to be created in Fig. 8 is displayed on the display unit 55 of the terminal device 12 during geomagnetic field measurement. On the map 151 on the display unit 55, the current position of the measurer (measurement position) is displayed with a current position mark 191. The current position mark 191 has, for example, an isosceles triangle shape in which the apex angle of the isosceles triangle represents the traveling direction of the measurer. However, the form of the current position mark 191 is not limited to this.

The measurement position detection unit 71 causes the display unit 55 to display the current position mark 191 on the map 151 based on the measurement position (current position of the measurer) estimated by the PDR. The measurement position detection unit 71 detects the traveling direction of the measurer based on the direction of change in the measurement position estimated by the PDR, and sets the direction of the vertex of the current position mark 191. In the following description, when the measurement position detection unit 71 corrects the measurement position in response to the measurer specifying the way position or the like, the measurement position estimated by the PDR refers to a measurement position detected by the measurement position detection unit 71 based on the correction and the PDR.

<Extended Mode 4>

Extended mode 4 relates to processing of assisting the measurer in setting a measurement path and specifying a way position during geomagnetic field measurement.

Fig. 9 is a diagram illustrating Extended mode 4 to assist the measurer in setting a measurement path and specifying a way position during geomagnetic field measurement. In the drawing, the same reference numerals are given to the portions corresponding to those in the map 151 of Fig. 4, and description thereof will be omitted.

The map 151 of the target region 161 for which geomagnetic field data is to be created in Fig. 9 is displayed on the display unit 55 of the terminal device 12 during geomagnetic field measurement. When the measurer specifies the measurement start position SP on the map 151 on the display unit 55, a line (arrow) 201 indicating an appropriate measurement path and way position marks 211 to 221 indicating way positions to be specified by the measurer are displayed on the map 151 on the display unit 55.

When the measurer specifies the measurement start position SP and instructs the start of geomagnetic field measurement, the measurement position detection unit 71 calculates a measurement path that passes at least once through all the measurement target regions of the target region 161 for which geomagnetic field data is to be created. However, the measurement position detection unit 71 may set the measurement start position SP before starting the measurement to calculate the measurement path. In calculating the measurement path, the measurement position detection unit 71 calculates one continuous measurement path that passes through all the measurement target regions and such that the walking distance from the measurement start position to the measurement end position is the shortest possible. The measurement position detection unit 71 causes the display unit 55 to display the calculated measurement path with the line 201 or the like on the map 151. However, depending on the arrangement of the measurement target regions, one continuous measurement path cannot pass through all the measurement target regions. In that case, a plurality of independent measurement paths are calculated.

The measurement position detection unit 71 detects positions corresponding to corner areas in the calculated measurement path, and sets the detected corner areas as way positions. A corner area represents a position where passages extending in different directions intersect. As a result of movement along the measurement path, when the distance from a predetermined corner area (or measurement start position) to the next corner area (or measurement end position) exceeds, for example, 15 m, the measurement position detection unit 71 sets one or more way positions at approximately equal intervals of about 5 to 10 m on the measurement path connecting these corner areas. However, the interval for setting way positions on the measurement path are not limited to 5 to 10 m. After setting the way positions, the measurement position detection unit 71 causes the display unit 55 to display the way position marks 211 to 221 such as stars at the way positions on the map 151.

Fig. 10 is a diagram illustrating Extended mode 4 in a case where the spatial arrangement in the target region 161 for which geomagnetic field data is to be created is different from that in Fig. 9.

Two shelves 241 and 242 are arranged in the target region 161 of the map 151 of Fig. 10, so that three passages extending in the x-axis direction are arranged in parallel in the y-axis direction. The three passages are not continuous.

In the case of such a target region 161, the measurement position detection unit 71 calculates three independent measurement paths corresponding to the three passages, and causes the display unit 55 to display lines 231, 232 and 233 that indicate the three measurement paths on the map 151. Note that the geomagnetic field measurement is performed three times for the respective three measurement paths.

As in the case of Fig. 9, in the case where there is a corner area(s) in each measurement path, the measurement position detection unit 71 sets the corner areas as the way positions. As a result of movement along the measurement path, when the distance from a predetermined corner area (or measurement start position) to the next corner area (or measurement end position) exceeds 15 m, the measurement position detection unit 71 sets one or more way positions at approximately equal intervals of about 5 to 10 m on the measurement path connecting these corner areas. However, the interval for setting way positions on the measurement path are not limited to 5 to 10 m. After setting the way positions, the measurement position detection unit 71 causes the display unit 55 to display the way position marks 261 to 269 such as stars at the way positions on the map 151. In the example of Fig. 10, for example, the way position mark 261 representing the measurement start position SP and the way position mark 263 representing the measurement end position EP are displayed on the measurement path represented by the line 231. The way position mark 262 is displayed near the middle between the way position mark 261 and the way position mark 263. To measure geomagnetic fields along the measurement path of the line 231, the measurer specifies the position of the way position mark 261 on the map 151 on the display unit 55 to start the geomagnetic field measurement. After the geomagnetic field measurement is started, the measurer specifies the position of the way position mark 262 on the map 151 on the display unit 55 when reaching the position of the way position mark 262. When reaching the position of the way position mark 263, the measurer specifies the position of the way position mark 263 on the map 151 on the display unit 55 to end the geomagnetic field measurement. In the same way, the measurer performs geomagnetic field measurement on the measurement paths indicated by lines 232 and 233 as well.

Fig. 11 is a diagram illustrating Extended mode 4 in a case where the spatial arrangement in the target region 161 for which geomagnetic field data is to be created is different from those in Figs. 9 and 10. The target region 161 on the map 151 of Fig. 11 is an open space without shelves or the like. Therefore, the entire target region 161 is the measurement target region.

The map 151 of the target region 161 in Fig. 11 is displayed on the display unit 55 of the terminal device 12 during geomagnetic field measurement. When the measurer specifies the measurement start position SP on the map 151 on the display unit 55 or before the measurer starts geomagnetic field measurement, a line (arrow) 271 indicating an appropriate measurement path and way position marks 281 to 288 indicating way positions to be specified by the measurer are displayed on the map 151 on the display unit 55.

For the open space target region 161, the measurement position detection unit 71 sets virtual passages extending in the x-axis direction, and sets the virtual passages to be arranged at regular intervals in the y-axis direction. The interval between adjacent virtual passages is, for example, a distance that can appropriately interpolate (linearly interpolate), using the magnetic field strengths and azimuths on two adjacent virtual passages, the magnetic field strengths and azimuths in the space between the passages. For example, the interval between adjacent virtual passages is about 3 m. However, the interval between adjacent virtual passages is not limited to about 3 m. Similarly, the measurement position detection unit 71 sets virtual passages extending in the y-axis direction, and sets the virtual passages to be arranged at regular intervals in the x-axis direction. By setting these virtual passages, the measurement position detection unit 71 calculates a measurement path that passes at least once through all the virtual passages as the measurement target regions within the target region 161 as in the case of Fig. 9. The measurement position detection unit 71 causes the display unit 55 to display the calculated measurement path with the line 271 or the like on the map 151.

As in the case of Fig. 9, the measurement position detection unit 71 detects positions corresponding to corner areas in the calculated measurement path, and sets the detected corner areas as way positions. As a result of movement along the measurement path, when the distance from a predetermined corner area (or measurement start position) to the next corner area (or measurement end position) exceeds, for example, 15 m, the measurement position detection unit 71 sets one or more way positions at approximately equal intervals of about 5 to 10 m on the measurement path connecting these corner areas. However, the interval for setting way positions on the measurement path are not limited to 5 to 10 m. After setting the way positions, the measurement position detection unit 71 causes the display unit 55 to display the way position marks 281 to 288, which are star marks, at the way positions on the map 151.

<Extended Mode 5>

Extended mode 5 relates to processing in which the terminal device 12 prompts the measurer to specify a way position during geomagnetic field measurement.

Fig. 12 is a diagram illustrating Extended mode 5 to prompt the specification of a way position. In the drawing, the same reference numerals are given to the portions corresponding to those in the map 151 of Fig. 4, and description thereof will be omitted.

It is assumed that in the target region 161 for which geomagnetic field data is to be created in the map 151 of Fig. 12, the measurer has started the geomagnetic field measurement at the measurement start position SP, and has walked a measurement path that passes through the way positions CP1 to CP3 in order while carrying the terminal device 12. It is also assumed that the measurer has specified the way positions CP1 to CP3 on the map 151 displayed on the display unit 55 when arriving at the way positions CP1 to CP3. It is assumed that after reaching the way position CP3, the measurer has gone straight through a passage extending in the y-axis direction to the way position CP4, and then has turned along a path extending in the x-axis direction at the corner area of the way position CP4. In this situation, when the measurer does not specify the way position CP4 on the map 151 on the display unit 55 even though the measurer has passed through the corner area, the terminal device 12 issues a prompt notification to prompt the measurer to specify the way position. Examples of the prompt notification include the display of a prompt screen on the display unit 55 of the terminal device 12, output of sound (warning sound, guidance voice, etc.) from the speaker mounted in the terminal device 12, and vibration of the terminal device 12 by the actuator mounted in the terminal device 12.

The measurement position detection unit 71 of the terminal device 12 determines that the measurer has turned the corner area when the measurement position estimated by the PDR changes in a certain direction and then changes in another direction. At this time, when the measurer does not specify a way position through the input unit 56, the measurement position detection unit 71 issues the prompt notification.

The measurement position detection unit 71 calculates the walking distance from the way position specified last time by the measurer based on the amount of change in the measurement position estimated by the PDR. If the calculated walking distance exceeds a certain distance (for example, 15 m), the measurement position detection unit 71 may issue the prompt notification when the measurer does not specify a way position through the input unit 56.

The measurement position detection unit 71 can detect the current position of the measurer on the map 151 based on the measurement position estimated by the PDR. Therefore, when a way position such as a corner area to be specified by the measurer is within a predetermined distance from the current position of the measurer, the measurement position detection unit 71 may cause the display unit 55 to display that way position in advance on the map 151.

<Extended Mode 6>

Extended mode 6 relates to processing of prompting re-specification when the measurer specifies an incorrect position (in case of mistake) as a way position.

Fig. 13 is a diagram illustrating Extended mode 6 to prompt re-specification when the measurer specifies an incorrect position as a way position. In the drawing, the same reference numerals are given to the portions corresponding to those in the map 151 of Fig. 4, and description thereof will be omitted.

In the target region 161 on the map 151 of Fig. 13, it is assumed that the measurer has started geomagnetic field measurement at the measurement start position SP, and has walked a measurement path passing through the way positions CP1 to CP3 in order while carrying the terminal device 12. In addition, it is assumed that the measurer has specified the way positions CP1 to CP3 on the map 151 on the display unit 55 when reaching the way positions CP1 to CP3, respectively.

A dashed circle 301 illustrated in Fig. 13 represents a circle centered on the way position CP3. The radius of the circle 301 is a length obtained by multiplying the elapsed time from when the measurer specifies the way position CP3 to the present by a normal human walking speed. Therefore, the radius of the circle 301 increases over time. The region within this circle 301 represents a region (referred to as a walking limit region) where a person is allowed to be located after the person moves at a normal walking speed to pass through the way position CP3. Therefore, after the measurer specifies the way position CP3 on the map 151 on the display unit 55, if the way position CP4 to be specified next is not within the region of the circle 301 (not within a predetermined distance from the way position CP3), that is, if the way position CP4 is not within the walking limit region, there is a high possibility that the measurer made a mistake in specifying the way position. In this case, the measurer's specification of the way point is canceled, and the measurer is prompted to specify a correct way position again. Note that the measurer may be prompted to specify a correct way position within the region of the circle 301, or candidate points to be tapped may be displayed within the region of the circle 301.

Fig. 14 is a flowchart illustrating a procedure of processing of Extended mode 6 performed by the terminal device 12. In step S31, the measurement position detection unit 71 defines the walking limit region by multiplying the elapsed time from when the measurer's specification (tapping) of a way position on the map 151 on the display unit 55 is detected, by a normal human walking speed. The walking limit region represents a region where a person is reachable starting from the way position specified by the measurer at a normal human walking speed, as exemplified by the region of the circle 301 in Fig. 13. This walking limit region expands over time. The processing proceeds from step S31 to step S32.

In step S32, the measurement position detection unit 71 determines whether or not the way position specified next by the measurer is within the walking limit region.

If it is determined in step S32 that the way position specified next by the measurer is not within the walking limit region, the processing proceeds to step S33.

In step S33, the measurement position detection unit 71 prompts the measurer to specify a correct way position to stop expanding the walking limit region. The processing is returned from step S33 to step S32 to repeat step S32 and subsequent steps.

If it is determined in step S32 that the way position specified next by the measurer is within the walking limit region, the processing proceeds to step S34.

In step S34, the measurement position detection unit 71 determines whether or not the application for geomagnetic field measurement is kept running. In other words, the measurement position detection unit 71 determines whether or not the geomagnetic field measurement continues.

If it is determined in step S34 that the application for geomagnetic field measurement is kept running, the processing returns from step S34 to step S31 and repeats step S31 and subsequent steps.

If it is determined in step S34 that the application for geomagnetic field measurement is not kept running, that is, if the magnetomagnetic measurement has ended, the processing proceeds to step S35.

In step S35, the geomagnetic field data creation unit 73 creates geomagnetic field data (magnetic field distribution data). After the processing of step S35, the processing of this flowchart ends.

<Extended Mode 7>

Extended mode 7 relates to processing of prompting re-specification when the measurer specifies an incorrect position as a way position.

Fig. 15 is a diagram illustrating Extended mode 7 to prompt re-specification when the measurer specifies an incorrect position as a way position. In the drawing, the same reference numerals are given to the portions corresponding to those in the map 151 of Fig. 4, and description thereof will be omitted.

In the target region 161 on the map 151 of Fig. 15, it is assumed that the measurer has started geomagnetic field measurement at the measurement start position SP, has walked a measurement path passing through the way positions CP1 to CP3 in order while carrying the terminal device 12, and then has passed through the way position CP3. In addition, it is assumed that the measurer has specified the way positions CP1 to CP3 on the map 151 on the display unit 55 when reaching the way positions CP1 to CP3, respectively.

A dashed current position mark 191 illustrated in Fig. 15 represents the current measurement position estimated by the PDR. A dashed circle 321 represents a range of measurement error (estimation error) of measurement positions to be estimated by the PDR. In other words, if the current measurement position estimated by the measurement position detection unit 71 by the PDR is the position of the current position mark 191, the region of the circle 321 (within a predetermined distance from the current measurement position) may be the actual measurement position (position of the terminal device 12). The size (radius) of the circle 321 is constant because the size of the circle 321 is due to the measurement accuracy of the PDR.

After the measurer specifies the way position CP3 on the map 151 on the display unit 55, when the next specified way position CP4 is not within the region of the circle 321, the measurer has probably specified an incorrect position as a way position. In this case, the measurer's specification of the way point is canceled, and the measurer is prompted to specify a correct way position again.

Fig. 16 is a flowchart illustrating a procedure of processing of Extended mode 7 performed by the terminal device 12.

In step S51, the measurement position detection unit 71 sets a region having a predetermined radius around the measurement position (current position of the terminal device 12) estimated by the PDR. The predetermined radius is set to a size corresponding to the PDR measurement error. The processing proceeds from step S51 to step S52.

In step S52, the measurement position detection unit 71 determines whether or not the way position specified next by the measurer is within the region set in step S51.

If it is determined in step S52 that the way position specified next by the measurer is not within the region set in step S51, the processing proceeds from step S52 to step S53.

In step S53, the measurement position detection unit 71 prompts the measurer to specify a correct way position. The processing is returned from step S53 to step S52 to repeat step S52 and subsequent steps.

If it is determined in step S52 that the way position specified next by the measurer is not within the region set in step S51, the processing proceeds to step S54.

In step S54, the measurement position detection unit 71 determines whether or not the application for geomagnetic field measurement is kept running. In other words, the measurement position detection unit 71 determines whether or not the geomagnetic field measurement continues.

If it is determined in step S54 that the application for geomagnetic field measurement is kept running, the processing returns from step S54 to step S51 and repeats step S51 and subsequent steps.

If it is determined in step S54 that the application for geomagnetic field measurement is not kept running, that is, if the magnetomagnetic measurement has ended, the processing proceeds to step S55.

In step S55, the geomagnetic field data creation unit 73 creates geomagnetic field data (magnetic field distribution data). After the processing of step S55, the processing of this flowchart ends.

<Extended Mode 8>

Extended mode 8 relates to processing of automatically correcting a way position when the measurer specifies an incorrect position as the way position.

Fig. 17 is a diagram illustrating Extended mode 8 to automatically correct a way position when the measurer specifies an incorrect position as the way position. In the drawing, the same reference numerals are given to the portions corresponding to those in the map 151 of Fig. 4, and description thereof will be omitted.

Four rectangular shelves 351 to 354 are arranged in a 2×2 array in the target region 161 for which geomagnetic field data is to be created on the map 151 of Fig. 17. As a result, three passages extending in the x-axis direction are arranged in parallel in the y-axis direction, and three passages extending in the y-axis direction are arranged in parallel in the x-axis walking.

It is assumed that the measurer has started geomagnetic field measurement at the measurement start position SP, and has walked a measurement path passing through the way positions CP 1 and CP2 in order while carrying the terminal device 12. In addition, it is assumed that the measurer has specified the way positions CP1 and CP2 on the map 151 on the display unit 55 when reaching the way positions CP1 and CP2, respectively.

It is also assumed that the measurer has specified a position TP3 as the next way position CP3 on the map 151 on the display unit 55 after passing the way position CP2. If the position TP3 specified by the measurer is, for example, a position where a person is not allowed be located, such as within the region of the shelf 352 as illustrated in Fig. 17, the measurement position detection unit 71 of the terminal device 12 can determine that the position TP3 specified by the measurer is incorrect (erroneous). In this case, the measurement position detection unit 71 may prompt the measurer to specify a correct way position. Alternatively, the measurement position detection unit 71 may select a passage (region where a person is allowed to be located) with the highest probability that the measurer is located, and automatically correct a position in the selected passage (region) as the correct way position CP3.

When automatically correcting the way position CP3, for example, the measurement position detection unit 71 may select a passage with the highest probability that the measurer is located based on the way positions CP1 and CP2 specified before the measurer specifies the position TP3, or may select a passage including the current position of the terminal device 12 estimated by the PDR or a passage closest to the current position of the terminal device 12 estimated by the PDR. As an example of the former case, the measurement position detection unit 71 identifies a passage along which the measurer walked immediately before reaching the previous way position CP2 based on the way positions CP1 and CP2. If there is only one passage continued from the identified passage, the measurement position detection unit 71 selects that passage as a passage with the highest probability that the measurer is located. If there are a plurality of passages continued from the identified passage, the measurement position detection unit 71 selects, among the continuous passages, a passage in a direction closest to the specified passage as a passage with the highest probability that the measurer is located. After selecting the passage with the highest probability that the measurer is located, the measurement position detection unit 71 corrects as the correct way position CP3 a position in a passage displaced in parallel with a direction from the position TP3 specified by the measurer toward the selected passage (for example, a direction perpendicular to a direction along the selected passage).

<Program>

The above-described series of processing of the information processing system 1, the server device 11, the terminal device 12, or the terminal device 13 can also be performed by hardware or software. In a case in which the series of processing is performed by software, a program including the software is installed in a computer. Here, the computer includes a computer embedded in dedicated hardware or, for example, a general-purpose computer capable of executing various functions by installing various programs.

Fig. 18 is a block diagram illustrating a configuration example of hardware of a computer that executes, by means of a program, processing executed by the information processing system 1, the server device 11, the terminal device 12, or the terminal device 13.

In the computer, a central processing unit (CPU) 501, read-only memory (ROM) 502, and random access memory (RAM) 503 are connected to one another via a bus 504.

An input/output interface 505 is further connected to the bus 504. An input unit 506, an output unit 507, a storage unit 508, a communication unit 509, and a drive 510 are connected to the input/output interface 505.

The input unit 506 is a keyboard, a mouse, a microphone, or the like. The output unit 507 is a display, a speaker, or the like. The storage unit 508 is a hard disk, non-volatile memory, or the like. The communication unit 509 is a network interface or the like. The drive 510 drives a removable medium 511 such as a magnetic disk, an optical disc, a magneto-optical disk, or a semiconductor memory.

In the computer that has the above configuration, for example, the CPU 501 performs the above-described series of processing by loading a program stored in the storage unit 508 into the RAM 503 via the input/output interface 505 and the bus 504 and executing the program.

The program executed by the computer (the CPU 501) can be recorded on, for example, the removable medium 511 serving as a package medium for supply. The program can be supplied via a wired or wireless transmission medium such as a local area network, the Internet, or digital satellite broadcasting.

In the computer, by mounting the removable medium 511 on the drive 510, it is possible to install the program in the storage unit 508 via the input/output interface 505. The program can be received by the communication unit 509 via a wired or wireless transfer medium and can be installed in the storage unit 508. In addition, this program may be installed in advance in the ROM 502 or the storage unit 508.

Note that the program executed by a computer may be a program that performs processing chronologically in the order described in the present specification or may be a program that performs processing in parallel or at a necessary timing such as a called time.

The present technique can be also configured as follows:

(1) An information processing device including:

a sensor that measures a strength or an azimuth of a magnetic field or an electric field;
a display unit that displays a predetermined target region;
an input unit that specifies a position of the information processing device in the target region displayed on the display unit;
a detection unit that detects a position of the information processing device in the target region based on an estimated position of the information processing device and the position of the information processing device specified by the input unit; and
a creation unit that creates distribution data indicating strengths or azimuths of magnetic fields or electric fields at positions in the target region based on the strength or the azimuth of the magnetic field or the electric field measured by the sensor at each position of the information processing device detected by the detection unit.

(2) The information processing device according to (1), wherein the estimated position of the information processing device is a position of the information processing device estimated based on sensor outputs of an acceleration sensor and an angular velocity sensor.

(3) The information processing device according to (1) or (2), wherein the estimated position of the information processing device is a position obtained by estimating an amount of change in position from a predetermined reference position of the information processing device based on sensor outputs of an acceleration sensor and an angular velocity sensor.

(4) The information processing device according to any one of (1) to (3), wherein the input unit specifies a position of the information processing device when the information processing device moves in the target region and reaches a corner area.

(5) The information processing device according to any one of (1) to (4), wherein the input unit specifies a position of the information processing device when the information processing device moves a predetermined distance in the target region.

(6) The information processing device according to any one of (1) to (5), wherein the detection unit corrects the estimated position of the information processing device with the position of the information processing device specified by the input unit.

(7) The information processing device according to (3), wherein the detection unit corrects the estimated position of the device to the position of the information processing device specified by the input unit by changing the position of the information processing device specified by the input unit to the reference position.

(8) The information processing device according to any one of (1) to (7), wherein the detection unit causes the display unit to display, in the target region displayed on the display unit, the detected position of the information processing device.

(9) The information processing device according to any one of (1) to (8), wherein the detection unit causes the display unit to display, in the target region displayed on the display unit, a measurement path along which the information processing device is to be moved.

(10) The information processing device according to any one of (1) to (9), wherein the detection unit causes the display unit to display, in the target region displayed on the display unit, a position of the information processing device to be specified by the input unit when the information processing device reaches the position.

(11) The information processing device according to any one of (1) to (10), wherein when a position of the information processing device to be specified by the input unit is not specified, the detection unit issues a prompt notification to prompt for specifying the position of the information processing device.

(12) The information processing device according to any one of (1) to (11), wherein the detection unit prompts for re-input when the position of the information processing device specified by the input unit is incorrect.

(13) The information processing device according to (12), wherein the detection unit determines that the position is incorrect when the input unit specifies a position that is away from a previous position of the information processing device specified by the input unit by a predetermined distance or more according to an elapsed time.

(14) The information processing device according to (12), wherein the detection unit determines that the position is incorrect when the position of the information processing device specified by the input unit is away from the detected current position of the information processing device by a predetermined distance or more.

(15) The information processing device according to any one of (1) to (10), wherein when the position of the information processing device specified by the input unit is a position where a person is not allowed to be located, the detection unit corrects the position of the information processing device specified by the input unit to a position where a person is allowed to be located.

(16) An information processing method performed by an information processing device including a sensor,

a display unit,
an input unit,
a detection unit, and
a creation unit,
the information processing method including:
measuring, by the sensor, a strength and an azimuth of a magnetic field or an electric field;
displaying, by the display unit, a predetermined target region;
specifying, by the input unit, a position of the information processing device in the target region displayed on the display unit;
detecting, by the detection unit, a position of the information processing device in the target region based on an estimated position of the information processing device and the position of the information processing device specified by the input unit; and

creating, by the creation unit, distribution data indicating strengths and azimuths of magnetic fields or electric fields at positions in the target region based on the strength and the azimuth of the magnetic field or the electric field measured by the sensor at each position of the information processing device detected by the detection unit.

(17) A program causing a computer to function as:

a sensor that measures a strength and an azimuth of a magnetic field or an electric field;
a display unit that displays a predetermined target region;
an input unit that specifies a position of the information processing device in the target region displayed on the display unit;
a detection unit that detects the position of the device in the target region based on the estimated position of the device and the position of the device specified by the input unit; and
a creation unit that creates distribution data indicating strengths or azimuths of magnetic fields or electric fields at positions in the target region based on the strength and the azimuth of the magnetic field or the electric field measured by the sensor at each position of the information processing device detected by the detection unit.

[Reference Signs List]

1 Information processing system
11 Server device
12, 13 Terminal device
31 Map data storage unit
32 Geomagnetic field data storage unit
51, 91 Acceleration sensor
52, 92 Angular velocity sensor
53, 93 Magnetic sensor
54, 94 Processing unit
55 Display unit
56 Input unit
71 Measurement position detection unit
72 Magnetic measurement result storage unit
73 Geomagnetic field data creation unit
111 Position estimation unit
112 Signal processing unit

**Claims**

1. An information processing device comprising:

a sensor that measures a strength or an azimuth of a magnetic field or an electric field;
a display unit that displays a predetermined target region;
an input unit that specifies a position of the information processing device in the target region displayed on the display unit;
a detection unit that detects a position of the information processing device in the target region based on an estimated position of the information processing device and the position of the information processing device specified by the input unit; and
a creation unit that creates distribution data indicating strengths or azimuths of magnetic fields or electric fields at positions in the target region based on the strength or the azimuth of the magnetic field or the electric field measured by the sensor at each position of the information processing device detected by the detection unit.

2. The information processing device according to claim 1, wherein the estimated position of the information processing device is a position of the information processing device estimated based on sensor outputs of an acceleration sensor and an angular velocity sensor.

3. The information processing device according to claim 1, wherein the estimated position of the information processing device is a position obtained by estimating an amount of change in position from a predetermined reference position of the information processing device based on sensor outputs of an acceleration sensor and an angular velocity sensor.

4. The information processing device according to claim 1, wherein the input unit specifies a position of the information processing device when the information processing device moves in the target region and reaches a corner area.

5. The information processing device according to claim 1, wherein the input unit specifies a position of the information processing device when the information processing device moves a predetermined distance in the target region.

6. The information processing device according to claim 1, wherein the detection unit corrects the estimated position of the information processing device with the position of the information processing device specified by the input unit.

7. The information processing device according to claim 3, wherein the detection unit corrects the estimated position of the device to the position of the information processing device specified by the input unit by changing the position of the information processing device specified by the input unit to the reference position.

8. The information processing device according to claim 1, wherein the detection unit causes the display unit to display, in the target region displayed on the display unit, the detected position of the information processing device.

9. The information processing device according to claim 1, wherein the detection unit causes the display unit to display, in the target region displayed on the display unit, a measurement path along which the information processing device is to be moved.

10. The information processing device according to claim 1, wherein the detection unit causes the display unit to display, in the target region displayed on the display unit, a position of the information processing device to be specified by the input unit when the information processing device reaches the position.

11. The information processing device according to claim 1, wherein when a position of the information processing device to be specified by the input unit is not specified, the detection unit issues a prompt notification to prompt for specifying the position of the information processing device.

12. The information processing device according to claim 1, wherein the detection unit prompts for re-input when the position of the information processing device specified by the input unit is incorrect.

13. The information processing device according to claim 12, wherein the detection unit determines that the position is incorrect when the input unit specifies a position that is away from a previous position of the information processing device specified by the input unit by a predetermined distance or more according to an elapsed time.

14. The information processing device according to claim 12, wherein the detection unit determines that the position is incorrect when the position of the information processing device specified by the input unit is away from the detected current position of the information processing device by a predetermined distance or more.

15. The information processing device according to claim 1, wherein when the position of the information processing device specified by the input unit is a position where a person is not allowed to be located, the detection unit corrects the position of the information processing device specified by the input unit to a position where a person is allowed to be located.

16. An information processing method performed by an information processing device including a sensor,

a display unit,
an input unit,
a detection unit, and
a creation unit,
the information processing method comprising:
measuring, by the sensor, a strength and an azimuth of a magnetic field or an electric field;
displaying, by the display unit, a predetermined target region;

specifying, by the input unit, a position of the information processing device in the target region displayed on the display unit;

detecting, by the detection unit, a position of the information processing device in the target region based on an estimated position of the information processing device and the position of the information processing device specified by the input unit; and

creating, by the creation unit, distribution data indicating strengths and

azimuths of magnetic fields or electric fields at positions in the target region based on the strength and the azimuth of the magnetic field or the electric field measured by the sensor at each position of the information processing device detected by the detection unit.

17. A program causing a computer to function as:

a sensor that measures a strength and an azimuth of a magnetic field or an electric field;

a display unit that displays a predetermined target region;

an input unit that specifies a position of the information processing device in the target region displayed on the display unit;

a detection unit that detects the position of the device in the target region based on the estimated position of the device and the position of the device specified by the input unit; and

a creation unit that creates distribution data indicating strengths or azimuths of magnetic fields or electric fields at positions in the target region based on the strength and the azimuth of the magnetic field or the electric field measured by the sensor at each position of the information processing device detected by the detection unit.

Fig. 1

Fig. 2

Fig. 3

Fig. 4

Fig. 5

```
                    ┌──────────────┐
                    │    START     │
                    └──────┬───────┘
                           │         S11
                    ┌──────▼───────────────┐
                    │ TAP CURRENT POSITION │
                    │   (START POSITION)   │
                    └──────┬───────────────┘
                           │         S12
                    ┌──────▼───────────────┐
                    │        WALK          │◄──────┐
                    └──────┬───────────────┘       │
                           │         S13            │
                    ╱──────▼───────────────╲  No    │
                   ╱ WALKED ABOUT 10 to 15 m╲──────►│
                   ╲       or                ╱      │
                    ╲  REACHED CORNER?      ╱        │
                     ╲──────┬──────────────╱         │
                           │ Yes                    │
                           │         S14            │
                    ┌──────▼───────────────┐        │
                    │    TAP CURRENT       │        │
                    │     POSITION         │        │
                    └──────┬───────────────┘        │
                           │         S15            │
                    ╱──────▼───────────╲  No         │
                   ╱  WANT TO END APP?  ╲───────────┘
                    ╲──────┬───────────╱
                           │ Yes
                    ┌──────▼───────┐
                    │     END      │
                    └──────────────┘
```

Fig. 6

151

161

171    CP5    CP4    173

SHELF    SHELF    SHELF

CP6    TP6    172
175

CP3

174    176

SHELF    SHELF    SHELF

SP    CP1    CP2

Y

X

Fig. 7

Fig. 8

Fig. 9

Fig. 10

Fig. 11

Fig. 12

Fig. 13

Fig. 14

```
                    ┌─────────────┐
                    │    START    │
                    └──────┬──────┘
                           │
      ┌────────────────────┤        S31
      │        ┌───────────▼──────────────┐
      │        │ AFTER DETECTION OF TAPPING,│
      │        │  DEFINE HUMAN WAKING LIMIT │
      │        │    REGION BY MULTIPLYING   │
      │        │ ELAPSED TIME FROM TAPPING BY│
      │        │ NORMAL HUMAN WALKING SPEED │
      │        └───────────┬──────────────┘
      │                    │               S32
      │            ┌───────▼────────────────┐
      │           ╱ IS NOT NEXT TAPPED POSITION╲  Yes
      │          ╱  WITHIN WALKING LIMIT REGION? ╲──────┐
      │          ╲                              ╱       │
      │           ╲──────────┬──────────────── ╱        │
      │                   No │                          │
      │                      │          S34             │
  Yes │           ┌──────────▼──────────┐               │
  ─────◄─────────╱                       ╲              │
      │          ╲  IS APP KEPT RUNNING? ╱              │
      │           ╲─────────┬──────────╱                │
      │                  No │                           │
      │                     │                 S33       │
      │                     │      ┌──────────▼────────┐│
      │                     │      │ PROMPT FOR TAPPING ││
      │                     │      │ CORRECT POSITION TO││
      │                     │      │  STOP EXPANDING    ││
      │                     │      │ WALKING LIMIT REGION│
      │                     │      └─────────┬──────────┘
      │                     │      S35       │
      │           ┌─────────▼──────┐         │
      │           │ CREATE GEOMAGNETIC│       │
      │           │   FIELD DATA    │         │
      │           └─────────┬───────┘         │
      │                     │                 │
      │              ┌──────▼──────┐          │
      │              │     END     │          │
      │              └─────────────┘          │
```

Fig. 15

Fig. 16

Fig. 17

Fig. 18

EP 4 269 946 A1

## INTERNATIONAL SEARCH REPORT

| International application No. |
| --- |
| **PCT/JP2021/045448** |

**A. CLASSIFICATION OF SUBJECT MATTER**

***G01C 21/28***(2006.01)i
FI: G01C21/28

According to International Patent Classification (IPC) or to both national classification and IPC

**B. FIELDS SEARCHED**

Minimum documentation searched (classification system followed by classification symbols)

G01C21/28

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-58321 A (YAHOO JAPAN CORP) 23 March 2017 (2017-03-23)<br>entire text, all drawings | 1-17 |
| A | JP 2012-202787 A (SONY CORP) 22 October 2012 (2012-10-22)<br>entire text, all drawings | 1-17 |
| A | JP 2015-53726 A (CASIO COMPUTER CO LTD) 19 March 2015 (2015-03-19)<br>entire text, all drawings | 1-17 |
| A | US 2015/0281910 A1 (DUKE UNIVERSITY) 01 October 2015 (2015-10-01)<br>entire text, all drawings | 1-17 |
| A | US 2013/0197799 A1 (ELECTRONICS AND TELECOMMUNICATIONS RESEARCH INSTITUTE) 01 August 2013 (2013-08-01)<br>entire text, all drawings | 1-17 |
| A | US 2014/0378166 A1 (SAMSUNG ELECTRONICS CO., LTD.) 25 December 2014 (2014-12-25)<br>entire text, all drawings | 1-17 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**24 December 2021** | Date of mailing of the international search report<br><br>**18 January 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**
Information on patent family members

International application No.

**PCT/JP2021/045448**

| Patent document cited in search report | | | Publication date (day/month/year) | Patent family member(s) | | | Publication date (day/month/year) |
|---|---|---|---|---|---|---|---|
| JP | 2017-58321 | A | 23 March 2017 | US entire text, all drawings | 2017/0082440 | A1 | |
| JP | 2012-202787 | A | 22 October 2012 | US entire text, all drawings CN | 9110150 102692179 | B2 A | |
| JP | 2015-53726 | A | 19 March 2015 | (Family: none) | | | |
| US | 2015/0281910 | A1 | 01 October 2015 | WO | 2014/074837 | A1 | |
| US | 2013/0197799 | A1 | 01 August 2013 | KR | 10-2013-0089136 | A | |
| US | 2014/0378166 | A1 | 25 December 2014 | KR | 10-2014-0147926 | A | |

Form PCT/ISA/210 (patent family annex) (January 2015)

**EP 4 269 946 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017058321 A